# EUROPÄISCHE PATENTANMELDUNG

(11) **EP 2 608 033 A1**
(43) Veröffentlichungstag der Anmeldung: **26.06.2013**
(21) Anmeldenummer: 12198872.9
(22) Anmeldetag: 21.12.2012
(51) Int. Cl.: G06F 11/00, G06F 11/07

(54) **Verfahren zur Beseitigung von elektromagnetisch verursachten Fehlfunktionen**

(30) Priorität: 22.12.2011 DE 102011122009
(71) Anmelder: ROBERT BOSCH GMBH, 70442 Stuttgart (DE)
(72) Erfinder: Schaefer, Frank, 35043 Marburg (DE); Vild, Christian, 73249 Wernau/Neckar (DE); Brucker, Uwe, 73265 Dettingen (DE)

(57) **Zusammenfassung**

Im Stand der Technik werden EMV-Störungen von Geräten (10) mit LC-Display durch regelmäßige Hardwareresets und Neuinititalisierungen beseitigt, was zu einem unerwünschten Flackern des LC-Displays führt. Dies soll vermieden werden. Die Erfindung betrifft daher ein Verfahren zur Beseitigung von elektromagnetisch verursachten Fehlfunktionen in einem elektrischen oder elektronischen Gerät (10), wobei das Gerät (10) ein LC-Display (20) und einen zugeordneten LC-Display-Controller (30) mit eigenem auslesbaren Arbeitsspeicher (31) aufweist. Dabei werden einzelne spezielle Speicherstellen (32) mit festgelegtem Speicherstatus überwacht und anhand ungewünschter Veränderung beurteilt. Nur bei ungewünschten Änderungen dieser Speicherstellen (32) werden Maßnahmen durchgeführt, die das Gerät (10) wieder in einen störungsfreien Zustand versetzen.

## Beschreibung

Die Erfindung betrifft ein Verfahren zur Beseitigung von elektromagnetisch verursachten Fehlfunktionen in einem elektrischen oder elektronischen Gerät über ein eingebautes LC-Display (Liquid Crystal Display) und/oder organische LED-Displays, sogenannte OLED.

Aus dem Stand der Technik sind elektrisch eingebettete Systeme (embedded systems) mit LC-Display bekannt, zum Beispiel Fernbedienungen, bei denen es schwierig ist, eine elektromagnetisch verursachte Störung zu detektieren. Durch die Einkopplung von EMV-Störungen (Elektromagnetische Verträglichkeit-Störung) kommt es zu ungewollten Veränderungen des Wertes einzelner Speicherstellen (auch Kippen der Speicherstellen genannt) im LC-Display-Controller. Anschließend weicht der Wert dieser Speicherstellen entsprechend dem Soll-Wert ab. Speziell in diesem Fall handelt es sich um sogenannte Burst-Störungen, wie sie in der Europa-Norm 61000-4-4 beschrieben sind. Beispielsweise handelt es sich dabei um ein hochfrequentes Impulspaket, verursacht zum Beispiel durch einen Abrissfunken, welcher beim Öffnen eines stromdurchflossenen Schalters entsteht.

LC-Display-Controller mit internem Arbeitsspeicher und Steuerregister ermöglichen in der Regel nur eine Abfrage von wenigen Statusregistern, wodurch die Funktionalität des LC-Display-Controllers in nur einem kleinen Bereich überwacht werden kann. Es entsteht eine große Unschärfe hinsichtlich der Bewertung des Betriebszustandes des LC-Display-Controllers, weil der LC-Display-Controller hinsichtlich des ordnungsgemäßen Betriebs unzureichend überwacht wird.

Um eine ordnungsgemäße Funktion des LC-Display-Controllers sicherzustellen, sieht der Stand der Technik in definierten Zeitintervallen ein Hardwarereset und eine Neuinitialisierung des LC-Display-Controllers vor. Ob überhaupt elektromagnetische Störungen vorliegen, bleibt dabei unberücksichtigt. Bei diesem Hardwarereset und der Neuinitialisierung kommt es zu einem Flackern des LC-Displays. Dieses Flackern ist für einen Anwender sehr störend und unangenehm.

Der Erfindung liegt daher die Aufgabe zugrunde, die Nachteile des Stands der Technik zu beseitigen und ein Verfahren zur Beseitigung von elektromagnetisch verursachten Fehlfunktionen in einem elektrischen oder elektronischen Gerät mit LC-Display zur Verfügung zu stellen, das für den Anwender möglichst nicht wahrnehmbar ist. Insbesondere soll ein Flackern des LC-Displays auf ein Minimum reduziert werden.

Erfindungsgemäß wird dies mit dem Verfahren gemäß des Patentanspruchs 1 gelöst. Vorteilhafte Weiterbildungen sind den jeweiligen Unteransprüchen zu entnehmen.

Die Erfindung betrifft ein Verfahren zur Beseitigung von elektromagnetisch verursachten Fehlfunktonen in einem elektrischen oder elektronischen Gerät, wobei das Gerät ein LC-Display und einen zugeordneten LC-Display-Controller mit eigenem auslesbaren Arbeitsspeicher aufweist, umfassend folgende Schritte:
a) Erzeugen eines definierten Speicherzustands (x₀) innerhalb des Arbeitsspeichers des LC-Display-Controllers durch Besetzen von Speicherstellen in mindestens einem ausgewählten Bereich des Arbeitsspeichers mit 0 oder 1;
b) Speichern mindestens eines Abbildes (a₀) des im Arbeitsspeicher des LC-Display-Controllers definierten Speicherzustands (x₀) in einem externen Speicher und/oder als konstante Variable in einem Zeitpunkt t₀;
c) Auslesen des in dem mindestens einen ausgewählten Bereich des Arbeitsspeichers des LC-Display-Controllers vorhandenen Speicherzustands (x₁) in einem Zeitpunkt t₁;
d) Vergleich des im Zeitpunkt t₁ ermittelten Speicherzustands (x₁) mit dem im Zeitpunkt t₀ im externen Speicher gespeicherten Abbild (a₀) des definierten Speicherzustands (x₀) und/oder mit einer konstanten Variablen;
e) Durchführen einer Maßnahme zur Beseitigung der elektromagnetisch verursachten Fehlfunktion, wenn eine Abweichung, zwischen dem im Zeitpunkt t₁ ermittelten Speicherzustand (x₁) und dem im Zeitpunkt t₀ im externen Speicher gespeicherten Abbild (a₀) des definierten Speicherzustands (x₀) größer ist als eine zulässige Abweichung.

Mit dem erfindungsgemäßen Verfahren können auf einfache Weise speziell ausgewählte Speicherstellen oder Speicherbereiche im Arbeitsspeicher des LC-Display-Controllers und somit dessen ordnungsgemäßer Betrieb überwacht werden. Diese überwachten Speicherstellen oder Speicherbereiche werden in mindestens einem ausgewählten Bereich des Arbeitsspeichers gezielt mit den binären Werten 0 und/oder 1 besetzt. Veränderungen der spezifisch besetzten und überwachten Speicherstellen oder -bereiche im Arbeitsspeicher des LC-Display-Controllers, die durch von außen einwirkende und unerwünschte elektromagnetische Strahlung hervorgerufen werden, können detektiert werden. Diese Fehlfunktionen können beispielsweise auch Fehldarstellungen von Pixeln in einem Display sein. Nur wenn eine Abweichung größer als eine zulässige Abweichung ist, wird die Veränderung durch eine Maßnahme behoben, indem zum Beispiel ein Hardwarereset und/oder eine Neuinitialisierung durchgeführt werden.

Nach dem Hardwarereset und der Neuinitialisierung des LC-Display-Controllers können weitere Maßnahmen für andere Peripheriekomponenten des eingebetteten Systems (embedded systems) ausgeführt werden, um auch dortige Speicherveränderung durch elektromagnetische Störungen zu beseitigen und einen ordnungsgemäßen und stabilen Zustand des gesamten Systems zu erhalten.

Die Zeitintervalle, zwischen denen die definierten Speicherstellen überwacht und mit dem gespeicherten Abbild verglichen werden sollen, kann je nach Bedarf festgelegt werden. So erlaubt das Verfahren eine Anpassung des Zeitintervalls an die Anfälligkeit der Geräte gegen elektromagnetische Störungen. Stark anfällige Geräte können in kürzeren Zeitintervallen überwacht werden, als robustere. Maßnahmen zur Behebung der Störungen werden nur durchgeführt, wenn diese auch wirklich notwendig sind. Dadurch entfällt ein regelmäßiges Flackern des LC-Displays und es wird erst ein Hardwarereset durchgeführt, wenn tatsächlich eine Störung vorliegt. Dadurch wird die Benutzung für den Endanwender sehr viel komfortabler und angenehmer.

Zudem lassen sich über die Anzahl der Speicherstellen mit einer ungewünschten Zustandsänderung, also die gekippt sind, Rückschlüsse auf die Intensität oder Länge der EMV-Störung treffen, so dass mit dem Verfahren auch die Stärke der elektromagnetischen Störung bestimmt werden kann. Die Wahrscheinlichkeit, eine ungewünschte Zustandsänderung der Speicherstellen im LC-Display-Controller zu detektieren, kann mit der Anzahl der überwachten Speicherstellen erhöht werden. Auf diese Weise kann, je nach Empfindlichkeit des elektronischen oder elektrischen Geräts gegenüber elektromagnetischen Störungen die Entdeckungswahrscheinlichkeit erhöht werden, indem eine größere Anzahl an Speicherstellen gegenüber unbeabsichtigten Zustandsänderungen überwacht wird.

In einer vorteilhaften Ausbildung der Erfindung wird der mindestens eine ausgewählte Bereich des Arbeitsspeichers im LC-Display-Controller einem nicht sichtbaren Anzeigenbereich auf dem LC-Display zugeordnet. Damit werden Speicherstellen des LC-Display-Controllers überwacht, denen keine Pixel im sichtbaren LC-Displaybereich zugeordnet sind. Eine Beschreibung dieser Speicherstellen hat keine Auswirkung auf die im Display wiedergegebene Anzeige und ist für den Anwender somit nicht wahrnehmbar. Dies ist insbesondere dann möglich, wenn der Speicherbereich des LC-Display-Controllers nicht komplett für die Darstellung des LC-Displaybereichs benötigt wird, wie zum Beispiel wenn die maximal mögliche Auflösung des LC-Display-Controllers nicht physikalisch in Pixel auf dem Display umgesetzt wird. Alternativ können auch Speicherbereiche verwendet werden, dessen Pixel im nicht sichtbaren Bereich des Displays angeordnet sind, beispielsweise durch Gehäuse oder Ähnliches verdeckte Bereiche.

In einer anderen oder ergänzenden Ausführungsform wird der mindestens eine ausgewählte Bereich des Arbeitsspeichers im LC-Display-Controller einem sichtbaren Anzeigenbereich auf dem LC-Display zugeordnet. Dazu werden Speicherstellen des LC-Display-Controllers überwacht, die für Speicherstellen im LC-Display-Controller stehen, welche Pixeln im sichtbaren LC-Displaybereich zugeordnet sind. Diese Pixelzustände der definierten Speicherstellen können mittels einer integrierten und dynamischen Auswertung, einem speziellen Algorithmus, überwacht werden.

Das ist insbesondere sinnvoll, wenn kein überschüssiger oder zusätzlicher Speicherplatz im LC-Display-Controller vorhanden ist. Somit muss nur wirklich benötigter Arbeitsspeicher im LC-Display-Controller des elektrischen oder elektronischen Geräts zur Verfügung gestellt werden. Trotzdem ist eine Detektion von elektromagnetisch verursachten Fehlfunktionen möglich und wahrnehmbare Maßnahmen zur Beseitigung werden auf ein Minimum reduziert.

Vorzugsweise erfolgt die Wiederholung der Verfahrensschritte c), d) und e) in regelmäßigen Zeitabständen *Δ*t. Dies erlaubt eine ständige Überwachung der Speicherstellen und stellt somit einen ordnungsgemäßen Betrieb des LC-Display-Controllers sicher. Die Veranlassung einer Maßnahme gemäß Verfahrensschritt e) erlaubt die Behebung einer tatsächlichen aufgetretenen Störung. Ein regelmäßiges Hardwarereset und ein Neuinitialisieren in regelmäßigen Abständen, auch ohne Vorliegen einer Störung, ist nicht mehr notwendig.

Ferner sieht eine nähere Ausgestaltung vor, dass für den Vergleich des im Zeitpunkt t₁ ermittelten Speicherzustands (x₁) mit dem im Zeitpunkt t₀ im externen Speicher gespeicherten Abbild (a₀) des definierten Speicherzustands (x₀) wenigstens ein Algorithmus verwendet wird. Alternativ oder ergänzend zum Vergleich mit einem externen Speicher ist auch ein Ablegen als konstante Variable in einem PROM oder EEPROM oder einem Flash-Speicher oder auch als Zahlenfolge oder -reihe denkbar. Ein Vergleichen erfolgt dann mit diesen Quellen.

Gemäß einer Fortbildung des Vergleichs ist in wenigstens einem Algorithmus eine Checksummenprüfung integriert. Dadurch wird ein korrektes Ablaufen der Algorithmen kontrolliert und ein fehlerfreies Abgleichen der definierten Speicherstellen erreicht. Ein einwandfreies Ablaufen der Überwachung einzelner Speicherstellen oder Speicherbereiche wird auf diese Weise sichergestellt und eine Fehlfunktion vermieden. Dieser Algorithmus kann an die jeweilige Konfiguration des elektrischen oder elektronischen Geräts angepasste werden. Der Algorithmus kann dabei beispielsweise eine Checksummenprüfung (CRC) über einen größeren Bereich von Speicherstellen (4-, 8-, 16-, 32-Bit), eine Paritätsprüfung, die beispielsweise eine Parität auf einzelnen Speicherstellen prüft, oder einen geschwindigkeitsoptimierten Algorithmus, der in Speicherstellen oder Speicherbereichen (4-, 8-, 16-, 32-Bit) alle Bit auf 0 oder 1 prüft, umfassen. Das Verfahren ist somit an die Störanfälligkeit eines Gerätes anpassbar.

Sollten bei dem Vergleich der speziellen Speicherstellen Abweichungen auftreten, d. h. gekippte Speicherstellen vorliegen, sieht eine mögliche verfahrensgemäße Maßnahme von Verfahrensschritt e) eine Durchführung eines Hardwareresets und eine Neuinitialisierung des LC-Display-Controllers vor. Dadurch wird das Gerät wieder in den Ursprungszustand zurückversetzt. Somit sind alle Störungen, die durch Einwirkung von fremder elektromagnetischer Strahlung hervorgerufen wurden und zum Kippen von Speicherstellen geführt haben, wieder entfernt und das Gerät ist voll funktionsfähig. Ein weiterer Vorteil ist, dass diese Maßnahme nicht in regelmäßigen Zeitintervallen automatisch abläuft, sondern nur wenn es wirklich erforderlich ist, d. h. wenn es zuvor zu Störungen innerhalb des Speicherbereichs durch elektromagnetische Störungen gekommen ist.

Gemäß einer Ergänzung des Verfahrens wird die Anzahl und die Zeitabstände der gemäß Verfahrensschritt e) durchzuführenden Maßnahmen erfasst. Damit können Rückschlüsse auf die Intensität und Länge der auf den Speicher einwirkenden elektromagnetischen Störungen gezogen werden. Anschließend können Störmeldungen ausgegeben oder die Zeitabstände zur Wiederholung der Schritte c), d) und e) angepasst werden. Es ist denkbar, mit dem ermittelten Betriebsverhalten einen Fehlerspeicher mit Zeitstempel zu generieren. Dabei lassen sich auch die Größe und die Häufigkeit der EMV-Störungen aufzeichnen und stehen für Servicezwecke zur Verfügung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung.

Die einzige Figur stellt ein Ausführungsbeispiel der Erfindung dar und zeigt eine schematische Darstellung eines elektrischen oder elektronischen Geräts 10 mit einem LC-Display 20, einem zugeordneten LC-Display-Controller 30 und mit einem eigenen auslesbaren Arbeitsspeicher 31, in dem das erfindungsgemäße Verfahren zur Beseitigung von elektromagnetisch verursachten Fehlfunktionen durchgeführt wird. Dabei ist ein erster Teilbereich 331 des Arbeitsspeichers 31 mit einem sichtbaren Bereich 22 des LC-Displays 20 gekoppelt, ein zweiter Teilbereich 332 des Arbeitsspeichers 31 mit einem nicht sichtbaren Bereich 21 des LC-Displays 20 gekoppelt, und ein dritter Teilbereich 333 ist nicht mit Pixeln des Displays 20 gekoppelt.

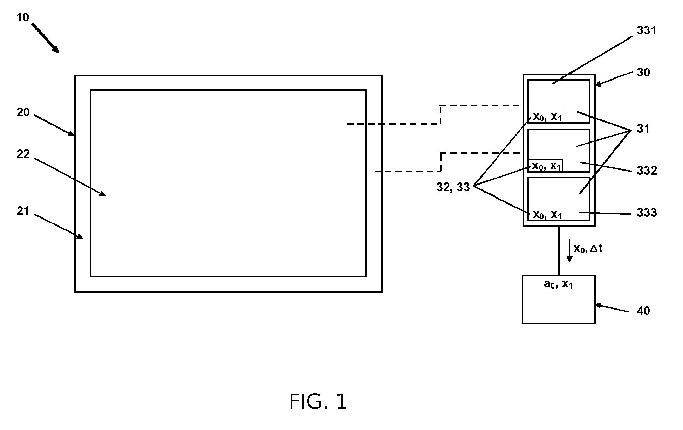

In einem ersten Verfahrensschritt werden definierte Speicherzustände x₀ innerhalb des Arbeitsspeichers 31 des LC-Display-Controllers 30 erzeugt. Dazu werden definierte Speicherstellen 32 in mindestens einem ausgewählten Bereich 33 in einem definierten, genau festgelegten Muster mit 0 oder 1 besetzt. Erkennbar ist in der Fig. 1, dass dieser Bereich 33 den ersten, zweiten und dritten Teilbereich 331, 332, 333 des Arbeitsspeichers umfasst. Der so erzeugte Speicherzustand x₀ wird als Abbild a₀ in einem externen Speicher 40 zum Zeitpunkt t₀ gespeichert und dient dort einem Vergleich mit dem Speicherzustand x₁ des Arbeitsspeichers 31 zum Zeitpunkt t₁. Dazu wird der ausgewählte Bereich 33 des Arbeitsspeichers 31 des LC-Display-Controllers 30 in vorgegebenen regelmäßigen Zeitintervallen 4t ausgelesen.

Der Vergleich des Abbildes a₀ des Speicherzustandes x₀ zum Zeitpunkt t₀ im externen Speicher 40 mit dem zu einem späteren Zeitpunkt t₁ im Arbeitsspeicher 31 vorhandenen Speicherzustand x₁ wird mit mindestens einem dafür geeigneten Algorithmus durchgeführt. Zur Kontrolle erhält mindestens einer dieser Algorithmen eine integrierte Checksummenprüfung. Der Algorithmus kann dabei beispielsweise eine Checksummenprüfung (CRC) über einen größeren Bereich von Speicherstellen (4-, 8-, 16-, 32-Bit...), eine Paritätsprüfung, die beispielsweise eine Parität auf einzelnen Speicherstellen prüft, oder einem geschwindigkeitsoptimierten Algorithmus, der in Speicherstellen oder Speicherbereichen (4-, 8-, 16-, 32-Bit...) alle Bit auf 0 oder 1 prüft, umfassen. Für geschwindigkeitsoptimierte Algorithmen haben Mikrocontroller schnelle und optimierte Hardwarebefehle, die benutzt werden, um Abweichungen in Speicherzuständen zu detektieren.

Stimmt das im externen Speicher 40 gespeicherte Abbild a₀ des definierten Speichzustands x₀ nicht mit dem Speicherzustand x₁ zum Zeitpunkt t₁ überein, so hat eine ungewünschte Zustandsänderung innerhalb der überwachten Speicherstellen 32 stattgefunden, welche auf eine elektromagnetische Störung zurückgeführt werden kann. Um ein ordnungsgemäßes Funktionieren des LC-Display-Controllers 30 auch weiterhin zu ermöglichen, muss eine Maßnahme durchgeführt werden, die den Speicherzustand x₁ wieder in einen ordnungsgemäßen Zustand versetzt. Dazu eignen sich ein Hardwarereset und eine Neuinitialisierung.

Dabei wird der Ausgangszustand des Arbeitsspeichers 31 des LC-Display-Controllers 30 wieder hergestellt und der definierte Speicherzustand x₀ innerhalb des mindestens einen ausgewählten Bereichs 33 des Arbeitsspeichers 31 des LC-Display-Controllers 30 wieder hergestellt. Dazu werden die definierten Speicherstellen 32 wieder in mindestens einem ausgewählten Bereich 33 des Arbeitsspeichers 31 in einem definierten, genau festgelegten Muster mit 0 oder 1 besetzt.

Der ausgewählte Bereich 33 des Arbeitsspeichers 31 und somit die überwachten Speicherstellen 32 können wiederum in den drei Teilbereichen 331, 332, 333 des Arbeitsspeichers 31 liegen.

Weiterhin werden die Anzahl und die Zeitabstände von Hardwareresets und Neuinitialisierungen erfasst. Darauf basierend werden Rückschlüsse auf die Intensität und Länge der auf den Arbeitsspeicher 31 und damit auf das elektrische oder elektronische Gerät 10 einwirkenden elektromagnetischen Störungen gezogen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### BEZUGSZEICHENLISTE

- 10: elektronisches oder elektrisches Gerät
- 20: LC-Display
- 21: nicht sichtbarer Anzeigenbereich
- 22: sichtbarer Anzeigenbereich
- 30: LC-Display Controller
- 31: Arbeitsspeicher
- 32: Speicherstellen
- 33: ausgewählter Bereich
- 331: erster Teilbereich
- 332: zweiter Teilbereich
- 333: dritter Teilbereich
- 40: externer Speicher

## Patentansprüche

1. Verfahren zur Beseitigung von elektromagnetisch verursachten Fehlfunktionen in einem elektrischen oder elektronischen Gerät (10), wobei das Gerät (10) ein LC-Display (20) und einen zugeordneten LC-Display-Controller (30) mit eigenem auslesbaren Arbeitsspeicher (31) aufweist, umfassend folgende Schritte:
a) Erzeugen eines definierten Speicherzustands (x₀) innerhalb des Arbeitsspeichers (31) des LC-Display-Controllers (30) durch Besetzen von Speicherstellen (32) in mindestens einem ausgewählten Bereich (33) des Arbeitsspeichers (31) mit 0 oder 1;
b) Speichern mindestens eines Abbildes a₀ des im Arbeitsspeicher (31) des LC-Display-Controllers (30) definierten Speicherzustands (x₀) in einem externen Speicher (40) und/oder als konstante Variable in einem Zeitpunkt t₀;
c) Auslesen des in dem mindestens einen ausgewählten Bereich (33) des Arbeitsspeichers (31) des LC-Display-Controllers (30) vorhandenen Speicherzustands (x₁) in einem Zeitpunkt t₁;
d) Vergleich des im Zeitpunkt t₁ ermittelten Speicherzustands (x₁) mit dem im Zeitpunkt t₀ im externen Speicher (40) gespeicherten Abbild (a₀) des definierten Speicherzustands (x₀) und/oder mit einer konstanten Variablen;
e) Durchführen einer Maßnahme zur Beseitigung der elektromagnetisch verursachten Fehlfunktion, wenn eine Abweichung, zwischen dem im Zeitpunkt t₁ ermittelten Speicherzustand (x₁) und dem im Zeitpunkt t₀ im externen Speicher (40) gespeicherten Abbild (a₀) des definierten Speicherzustands (x₀) größer ist als eine zulässige Abweichung.

2. Verfahren nach Anspruch 1,
**dadurch gekennzeichnet, dass** der mindestens eine ausgewählte Bereich (33, 332) des Arbeitsspeichers (31) im LC-Display-Controller (30) einem nicht sichtbaren Anzeigenbereich (21) auf dem LC-Display (20) zugeordnet ist.

3. Verfahren nach Anspruch 1 oder 2,
**dadurch gekennzeichnet, dass** der mindestens eine ausgewählte Bereich (33, 331) des Arbeitsspeichers (31) im LC-Display-Controller (30) einem sichtbaren Anzeigenbereich (22) auf dem LC-Display (20) zugeordnet ist.

4. Verfahren nach einem der vorhergehenden Ansprüche,
**dadurch gekennzeichnet, dass** die Verfahrensschritte c), d) und e) in regelmäßigen Zeitabständen *Δ*t wiederholt werden.

5. Verfahren nach einem der vorhergehenden Ansprüche,
**dadurch gekennzeichnet, dass** für den Vergleich des im Zeitpunkt t₁ ermittelten Speicherzustands (x₁) mit dem im Zeitpunkt t₀ im externen Speicher (40) gespeicherten Abbild (a₀) des definierten Speicherzustands (x₀) wenigstens ein Algorithmus verwendet wird.

6. Verfahren nach Anspruch 5,
**dadurch gekennzeichnet, dass** in wenigstens einem Algorithmus eine Checksummenprüfung integriert ist.

7. Verfahren nach einem der vorhergehenden Ansprüche,
**dadurch gekennzeichnet, dass** als Maßnahme von Verfahrensschritt e) ein Hardwarereset und eine Neuinitialisierung des LC-Display-Controllers (30) durchgeführt werden.

8. Verfahren nach einem der vorhergehenden Ansprüche,
**dadurch gekennzeichnet, dass** die Anzahl und die Zeitabstände der gemäß Verfahrensschritt e) durchzuführenden Maßnahmen erfasst wird.
